# FASCICULE DE BREVET EUROPEEN

(11) **EP 3 699 096 B1**
(45) Date de publication et mention de la délivrance du brevet: **07.04.2021**
(21) Numéro de dépôt: 20155125.6
(22) Date de dépôt: 03.02.2020
(51) Int. Cl.: B64F 5/50

(54) **SYSTEME COMPORTANT UNE ENTREE D'AIR D'UN MOTEUR D'AERONEF ET UNE PROTECTION GONFLABLE POUR LADITE ENTREE D'AIR**
SYSTEM, DAS EINE LUFTEINLASSÖFFNUNG EINES LUFTFAHRZEUGMOTORS UMFASST, UND AUFBLASBARE SCHUTZVORRICHTUNG FÜR DIESE LUFTEINLASSÖFFNUNG
SYSTEM COMPRISING AN AIR INTAKE OF AN AIRCRAFT ENGINE AND INFLATABLE PROTECTION FOR SAID AIR INTAKE

(30) Priorité: 20.02.2019 FR 1901676
(43) Date de publication de la demande: 26.08.2020
(73) Titulaire: AIRBUS OPERATIONS (S.A.S.), 31060 Toulouse (FR)
(72) Inventeur: CANTIN, Jean-Marc, 31060 Toulouse Cedex 9 (FR); DUBOIS, Olivier, 31060 Toulouse Cedex 9 (FR)
(74) Mandataire: Gicquel, Olivier Yves Gérard

(56) Documents cités:
- CN-A- 107 097 948
- US-A1- 2017 297 744
- US-B2- 6 606 826

## Description

### DOMAINE TECHNIQUE

La présente invention concerne un système comportant une entrée d'air d'un moteur d'aéronef et une protection gonflable pour ladite entrée d'air.

### ETAT DE LA TECHNIQUE ANTERIEURE

Lors de la fabrication d'une entrée d'air pour un moteur d'aéronef, cette entrée d'air est disposée sur un chariot qui permet de déplacer ladite entrée d'air d'un poste d'assemblage à un autre. En outre, les chariots permettent également de déplacer et de stocker les entrées d'air dans une zone de stockage entre deux postes d'assemblage ou avant le montage sur le moteur de l'aéronef.

Une telle entrée d'air ainsi montée sur un chariot est régulièrement déplacée et, du fait de son envergure, il peut arriver que, durant une manœuvre, elle heurte une autre entrée d'air ainsi montée sur un autre chariot ou un élément de l'environnement (barrière, etc), ce qui peut endommager l'entrée d'air.

Le document US2017297744 décrit un chariot et une entrée d'air pour un moteur d'aéronef. Le document CN107097948 décrit une capsule protectrice remplie de gaz pour un drone. Le document US6606826 décrit un abri gonflable pour l'entretien d'un moteur d'aéronef.

### EXPOSE DE L'INVENTION

Un objet de la présente invention est de proposer un système comportant une entrée d'air d'un moteur d'aéronef et une protection gonflable pour ladite entrée d'air, où la protection gonflable protège l'entrée d'air lorsqu'elle est montée sur le chariot et qu'elle heurte un élément extérieur.

A cet effet, est proposé un système comportant :
- un chariot comportant une plateforme et des roues fixées sous la plateforme,
- une entrée d'air d'un moteur d'aéronef, où l'entrée d'air repose sur la plateforme de manière à présenter sa partie la plus étroite en haut, et sa partie la plus large en bas, et
- une protection gonflable sous la forme d'une enveloppe fermée qui est mise en place autour de la partie la plus large de l'entrée d'air.

Un tel système permet de protéger l'entrée d'air des chocs qu'elle pourrait subir lors des déplacements du chariot et d'augmenter la sécurité en évitant les chocs entre les opérateurs et l'entrée d'air.

Selon un autre mode de réalisation particulier, l'enveloppe prend la forme d'un boudin en matériau souple et dont les deux extrémités se fixent l'une à l'autre par des moyens de fixation.

Avantageusement, le système comporte une bande placée contre une face extérieure de l'entrée d'air et comportant une face orientée vers l'extérieur, ladite face présente des caractéristiques de fixation amovible, et au moins l'une des extrémités du boudin porte un élément de fixation complémentaire à la bande.

Selon un mode de réalisation particulier, l'enveloppe prend la forme d'un tore en matériau souple.

Avantageusement, la protection gonflable présente une valve de gonflage qui est disposée sur la surface extérieure de la protection gonflable.

### BREVE DESCRIPTION DES DESSINS

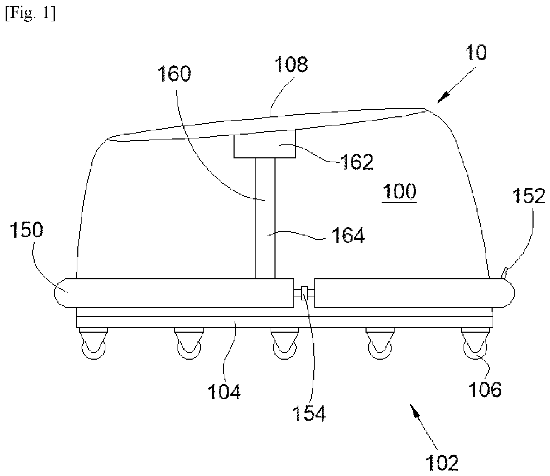

Les caractéristiques de l'invention mentionnées ci-dessus, ainsi que d'autres, apparaîtront plus clairement à la lecture de la description suivante d'un exemple de réalisation, ladite description étant faite en relation avec le dessin joint où
[Fig. 1] est une vue de côté d'un système selon l'invention comportant une entrée d'air et une protection gonflable.

### EXPOSE DETAILLE DE MODES DE REALISATION

Dans la description qui suit, les termes relatifs à une position sont pris en référence à une entrée d'air 100 telle qu'elle est représentée sur la Fig. 1.

La Fig. 1 montre un système 10 comportant un chariot 102 et une entrée d'air 100 d'un moteur d'aéronef où l'entrée d'air 100 est déposée sur le chariot 102.

Le chariot 102 comporte une plateforme 104 et des roues 106 fixées sous la plateforme 104. Le chariot 102 peut être constitué de plusieurs plateaux à roulettes juxtaposés les uns à côté des autres.

L'entrée d'air 100 repose sur la plateforme 104 de manière à présenter son bord d'attaque 108 vers le haut. La partie la plus étroite de l'entrée d'air 100 qui correspond au bord d'attaque 108 se situe donc en haut, et la partie la plus large, qui est à l'opposé, se situe en bas et donc sur la plateforme 104.

L'entrée d'air 100 porte une protection gonflable 150 qui est mise en place autour de la partie basse de l'entrée d'air 100, c'est-à-dire la partie la plus large qui repose sur la plateforme 104. La protection gonflable 150 est une enveloppe fermée pour être mise sous pression.

Une telle protection gonflable 150 peut donc être rapidement et facilement mise en place par le haut de l'entrée d'air 100, c'est-à-dire la partie la plus étroite, et descendue le long des flancs verticaux de l'entrée d'air 100 pour que cette dernière soit mise en place autour de la partie basse. Une telle protection gonflable 150 permet de protéger l'entrée d'air 100 des chocs qu'elle pourrait subir lors des déplacements du chariot 102 et d'augmenter la sécurité en évitant les chocs entre les opérateurs et l'entrée d'air 100.

Selon le mode de réalisation de l'invention présenté à la Fig. 1, l'enveloppe prend la forme d'un boudin en matériau souple, comme du caoutchouc, dont les deux extrémités se fixent l'une à l'autre par des moyens de fixation 154, comme par exemple des attaches amovibles, formant ainsi un tore. Les moyens de fixation 154 peuvent être réglables en longueur pour s'adapter au périmètre de l'entrée d'air 100.

Selon un autre mode de réalisation, l'enveloppe prend la forme d'un tore en matériau souple, comme du caoutchouc.

Le diamètre intérieur du tore est inférieur au diamètre extérieur le plus large de l'entrée d'air 100, c'est-à-dire de la partie basse, pour assurer le maintien en position de la protection gonflable 150.

La protection gonflable 150 présente une valve de gonflage 152 qui est disposée sur la surface extérieure de la protection gonflable 150, c'est-à-dire la surface qui reste accessible lorsque la protection gonflable 150 est en place sur l'entrée d'air 100.

La protection gonflable 150 peut présenter une autre valve prévue pour recevoir un manomètre qui permet de vérifier la pression de gonflage.

Pour faciliter la mise en place de la protection gonflable 150, le système 10 comporte une bande 160 qui se place contre la face extérieure de l'entrée d'air 100 et qui comporte une face 164 orientée à l'opposé de l'entrée d'air 100, c'est-à-dire vers l'extérieur, où ladite face 164 présente des caractéristiques de fixation amovible, c'est-à-dire qu'elle permet de fixer un élément tout en autorisant le retrait ultérieur dudit élément sans détérioration dudit élément ou de ladite bande 160. Ladite face 164 peut être par exemple une bande velcro®.

La mise en place et le maintien de la bande 160 sont assurés ici par l'intermédiaire d'une selle 162 qui se place à califourchon sur le bord d'attaque de l'entrée d'air 100 et à laquelle la bande 160 est fixée.

Au moins l'une des extrémités du boudin porte un élément de fixation complémentaire à la bande 160, c'est-à-dire que ladite extrémité peut être fixée de manière amovible à la bande 160. Ainsi, un opérateur peut mettre en place la bande 160, fixer la première extrémité du boudin à la bande 160 par l'intermédiaire de l'élément de fixation complémentaire, faire le tour de l'entrée d'air 100 avec la deuxième extrémité du boudin jusqu'à rejoindre la première extrémité et fixer les deux extrémités ainsi rapprochées par les moyens de fixation 154.

Lors du gonflage, la valve de gonflage peut être reliée à une source d'air au moyen d'une soufflette à air comprimé et/ou d'une buse.

## Revendications

1. Système (10) comportant :
- un chariot (102) comportant une plateforme (104) et des roues (106) fixées sous la plateforme (104),
- une entrée d'air (100) d'un moteur d'aéronef, où l'entrée d'air (100) repose sur la plateforme (104) de manière à présenter sa partie la plus étroite en haut, et sa partie la plus large en bas, et
**caractérisé en ce que** le système comprend en outre
- une protection gonflable (150) sous la forme d'une enveloppe fermée qui est mise en place autour de la partie la plus large de l'entrée d'air (100).

2. Système (10) selon la revendication 1, **caractérisé en ce que** l'enveloppe prend la forme d'un boudin en matériau souple et dont les deux extrémités se fixent l'une à l'autre par des moyens de fixation.

3. Système (10) selon la revendication 2, **caractérisé en ce qu'**il comporte une bande (160) placée contre une face extérieure de l'entrée d'air (100) et comportant une face (164) orientée vers l'extérieur, **en ce que** ladite face (164) présente des caractéristiques de fixation amovible, et **en ce qu'**au moins l'une des extrémités du boudin porte un élément de fixation complémentaire à la bande (160).

4. Système (10) selon la revendication 1, **caractérisé en ce que** l'enveloppe prend la forme d'un tore en matériau souple.

5. Système (10) selon l'une des revendications 1 à 4, **caractérisé en ce que** la protection gonflable (150) présente une valve de gonflage (152) qui est disposée sur la surface extérieure de la protection gonflable (150).

## Patentansprüche

1. System (10), umfassend:
- einen Wagen (102), der eine Plattform (104) und Räder (106) aufweist, die unter der Plattform (104) befestigt sind,
- einen Lufteinlass (100) eines Flugzeugtriebwerks, wobei der Lufteinlass (100) so auf der Plattform (104) ruht, dass sein schmalster Teil oben und sein breitester Teil unten liegt, und
**dadurch gekennzeichnet, dass** das System ferner Folgendes umfasst:
- einen aufblasbaren Schutz (150) in der Form einer geschlossenen Hülle, die um den breitesten Teil des Lufteinlasses (100) herum angeordnet ist.

2. System (10) nach Anspruch 1, **dadurch gekennzeichnet, dass** die Hülle die Form eines Wulsts aus einem flexiblen Material hat und ihre beiden Enden über Befestigungsmittel aneinander befestigt sind.

3. System (10) nach Anspruch 2, **dadurch gekennzeichnet, dass** es ein Band (160) aufweist, das an einer Außenfläche des Lufteinlasses (100) platziert ist und eine Fläche (164) aufweist, die nach außen gewandt ist, und dass die Fläche (164) entfernbare Befestigungsmerkmale aufweist und dass mindestens eines der Enden des Wulsts ein zu dem Band (160) komplementäres Befestigungselement trägt.

4. System (10) nach Anspruch 1, **dadurch gekennzeichnet, dass** die Hülle die Form eines Torus aus flexiblem Material hat.

5. System (10) nach einem der Ansprüche 1 bis 4, **dadurch gekennzeichnet, dass** der aufblasbare Schutz (150) ein Aufblasventil (152) aufweist, das an der Außenfläche des aufblasbaren Schutzes (150) angeordnet ist.

## Claims

1. System (10) comprising:
- a trolley (102) comprising a platform (104) and wheels (106) attached beneath the platform (104),
- an air intake (100) for an aircraft engine, the air intake (100) resting on the platform (104) so as to have its narrowest part at the top and its widest part of the bottom, and
**characterized in that** the system further comprises
- an inflatable protection element (150) in the form of a closed envelope that is installed around the widest part of the air intake (100).

2. System (10) according to Claim 1, **characterized in that** the envelope is in the form of a sausage of flexible material, whose two ends are secured to one another by securing means.

3. System (10) according to Claim 2, **characterized in that** it comprises a strip (160) placed against an outer face of the air intake (100) and comprising an outwardly oriented face (164), **in that** said face (164) has removable securing features, and **in that** at least one of the ends of the sausage bears a securing element that matches the strip (160).

4. System (10) according to Claim 1, **characterized in that** the envelope is in the form of a torus of flexible material.

5. System (10) according to one of Claims 1 to 4, **characterized in that** the inflatable protection element (150) has an inflation valve (152) which is arranged on the outer surface of the inflatable protection element (150).
